# EUROPEAN PATENT APPLICATION

(11) **EP 2 905 953 A1**
(43) Date of publication of application: **12.08.2015**
(21) Application number: 13843630.8
(22) Date of filing: 07.08.2013
(51) Int. Cl.: H04N 5/225, G03B 15/00, G03B 17/02, G03B 17/24, G06F 17/30, H04N 5/76, H04N 5/765, H04N 5/91

(54) **CONTENT ACQUISITION DEVICE, PORTABLE DEVICE, SERVER, INFORMATION PROCESSING DEVICE AND STORAGE MEDIUM**

(30) Priority: 05.10.2012 JP 2012223049
(71) Applicant: Sony Corporation, Tokyo 108-0075 (JP)
(72) Inventor: KAMADA, Yasunori, Tokyo 108-0075 (JP); SAKO, Yoichiro, Tokyo 108-0075 (JP); HAYASHI, Kazunori, Tokyo 108-0075 (JP); KON, Takayasu, Tokyo 108-0075 (JP)
(74) Representative: MFG Patentanwälte Meyer-Wildhagen Meggle-Freund Gerhard PartG mbB
(86) International application number: PCT/JP2013/071411
(87) International publication number: WO 2014/054342

(57) **Abstract**

There is provided a content acquisition device including a content acquisition unit configured to acquire content, and a transmission unit configured to transmit, to an outside, the content acquired by the content acquisition unit and identification information unique to the content acquisition device. The content and the identification information that have been transmitted by the transmission unit are associated with time information indicating time when the content acquisition unit acquires the content, are stored in a storage unit included in a server, and are, in a case where the server receives the identification information and the time information from an information processing device, referred to when content associated with the received identification information and the received time information is searched for from among the content stored in the storage unit and is transmitted to the information processing device.

## Description

### Technical Field

The present invention relates to a content acquisition device, a portable device, a server, an information processing device, and a storage medium.

### Background Art

Typically, many people take photographs and video to save memories at amusement centers and tourist locations. Also, at large-scale amusement parks referred to as theme parks, cameras are installed at key locations in attractions. Such cameras automatically take photographs when the ride arrives, and these photographs are then sold as prints to desiring customers after the attraction ends.

As a technology that such installed camera automatically takes photographs, Patent Literature 1, for example, discloses an image shooting system that distributes communication mechanism such as radio-frequency tags only to visitors whose images are to be shot, and shoots images on the basis of detecting identification information transmitted from such communication means.

Also, Patent Literature 2 discloses a system that an installed camera shoots images on the basis of detecting a subject in an image-shooting location according to an infrared or other sensor.

Meanwhile, another recent development is a wearable camera which is worn on a person's body and which automatically and continually shoots one's surroundings. Wearable cameras are also referred to as life logging cameras, since such cameras continually shoot one's daily life and activities.

Regarding such wearable cameras, Patent Literature 3, for example, discloses technology that wirelessly connects information terminals together to construct a personal wearable network that connects to the Internet.

In addition, Patent Literature 4 discloses technology that switches between an ordinary image-shooting mode, and an automatic image-shooting mode that automatically shoots images while a camera is worn on one's body.

In addition, Patent Literature 5 discloses technology that stores a shot image in association with biological information and action information of a photographer at a time of shooting the image.

### Patent Literature Citation List

### Patent Literature

Patent Literature 1: JP 2001-177750A
Patent Literature 2: JP 2002-112074A
Patent Literature 3: JP 2001-274936A
Patent Literature 4: JP 2004-356970A
Patent Literature 5: JP 2009-188899A

### Summary of Invention

### Technical Problem

Nowadays, an amount of shot images has become enormous because automatic image-shooting cameras such as the above-described installed camera and wearable camera have been popular and because storage capacities of digital cameras and the like have been improved. Accordingly, a technology for providing efficient access to important images with oneself in them is desired, for example.

In addition, the above-described Patent Literatures do not describe a technology for providing efficient access to important images on the basis of information of which an image shooting device notifies an outside.

Accordingly, the present disclosure proposes a novel and improved content acquisition device, portable device, server, information processing device, and storage medium that are capable of providing efficient access to important content on the basis of information of which the content acquisition device notifies an outside.

### Solution to Problem

According to the present disclosure, there is provided a content acquisition device including a content acquisition unit configured to acquire content, and a transmission unit configured to transmit, to an outside, the content acquired by the content acquisition unit and identification information unique to the content acquisition device. The content and the identification information that have been transmitted by the transmission unit are associated with time information indicating time when the content acquisition unit acquires the content, are stored in a storage unit included in a server, and are, in a case where the server receives the identification information and the time information from an information processing device, referred to when content associated with the received identification information and the received time information is searched for from among the content stored in the storage unit and is transmitted to the information processing device.

According to the present disclosure, there is provided a portable device including a reception unit configured to receive identification information unique to a content acquisition device from the content acquisition device, a storage control unit configured to associate the identification information received by the reception unit with time information indicating time when the content acquisition device acquires content, and store the identification information and time information in a storage medium, and a communication unit configured to communicate with an outside.

According to the present disclosure, there is provided a server including a communication unit configured to receive, from a content acquisition device, content acquired by the content acquisition device and identification information unique to the content acquisition device, a storage unit configured to associate the content, the identification information, with time information indicating time when the content acquisition device acquires the content, and store the content, the identification information, and the time information, a search unit configured to, in a case where the communication unit receives the identification information and the time information from an information processing device, search for content associated with the received identification information and the received time information from among the content stored in the storage unit, and a communication control unit configured to control the communication unit to transmit the content searched for by the search unit to the information processing device.

According to the present disclosure, there is provided an information processing device including a communication unit configured to transmit identification information unique to a content acquisition device and time information indicating time when the content acquisition device acquires content to a server, and receive content associated with the identification information and the time information from the server, and an output control unit configured to perform control in a manner that the communication unit outputs the content received from the server and associated with the identification information and the time information.

According to the present disclosure, there is provided a non-transitory computer-readable storage medium having a program stored therein, the program causing a computer to execute transmitting identification information unique to a content acquisition device and time information indicating time when the content acquisition device acquires content to a server, and receiving content associated with the identification information and the time information from the server, and performing control in a manner that the content received from the server and associated with the identification information and the time information is output.

### Advantageous Effects of Invention

As explained above, according to one or more of embodiments of the present disclosure, it is possible to provide efficient access to important content on the basis of information of which the content acquisition device notifies the outside.

### Brief Description of Drawings

[FIG. 1] FIG. 1 is an explanatory diagram showing an overview of a content management system according to an embodiment of the present disclosure.
[FIG. 2] FIG. 2 is an explanatory diagram showing a configuration of a content management system according to a first embodiment.
[FIG. 3] FIG. 3 is a block diagram showing a configuration of an automatic image shooting device according to the first embodiment.
[FIG. 4] FIG. 4 is a block diagram showing a configuration of an identification information receiving device according to the first embodiment.
[FIG. 5] FIG. 5 is a block diagram showing a configuration of a server according to the first embodiment.
[FIG. 6] FIG. 6 is a flowchart showing an operation process of an automatic image shooting device according to the first embodiment.
[FIG. 7] FIG. 7 is a flowchart showing an operation process of an identification information receiving device according to the first embodiment.
[FIG. 8] FIG. 8 is an explanatory diagram showing an example of a transmission process of content stored in an automatic image shooting device according to the first embodiment.
[FIG. 9] FIG. 9 is an explanatory diagram showing an example of a content management system according to the first embodiment.
[FIG. 10] FIG. 10 is an explanatory diagram illustrating an overview of access to content performed by a content management system according to the first embodiment.
[FIG. 11] FIG. 11 is a block diagram showing a configuration of an information processing device according to the first embodiment.
[FIG. 12] FIG. 12 is a flowchart showing an operation process of an information processing device according to the first embodiment.
[FIG. 13] FIG. 13 is an explanatory diagram showing an example of access to content according to the first embodiment.
[FIG. 14] FIG. 14 is an explanatory diagram showing an example of a priority deciding process according to a second embodiment.
[FIG. 15] FIG. 15 is an explanatory diagram showing an example of access to content according to the second embodiment.
[FIG. 16] FIG. 16 is an explanatory diagram showing an example of a priority deciding process according to the second embodiment.
[FIG. 17] FIG. 17 is an explanatory diagram showing an overview of a content management system according to a third embodiment.
[FIG. 18] FIG. 18 is a block diagram showing a configuration of an automatic image shooting device according to the third embodiment.
[FIG. 19] FIG. 19 is a block diagram showing a configuration of an identification information receiving device according to the third embodiment.
[FIG. 20] FIG. 20 is an explanatory diagram showing an overview of a content management system according to a fourth embodiment.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that the description is given in the following order.
1. Overview of Content Management System according to Embodiment of Present Disclosure
2. Embodiments
2-1. First Embodiment
(2-1-1. Configuration)
(2-1-2. Content Collecting Operation)
(2-1-3. Access to Content)
(2-1-4. Content Modification)
(2-1-5. Effect)
2-2. Second Embodiment
(2-2-1. Priority Deciding Process 1)
(2-2-2. Priority Deciding Process 2)
(2-2-3. Priority Deciding Process 3)
(2-2-4. Priority Deciding Process 4)
(2-2-5. Effect)
2-3. Third Embodiment
(2-3-1. Configuration)
(2-3-2. Operation Process)
(2-3-3. Effect)
2-4. Fourth Embodiment
(2-4-1. Overview)
(2-4-2. Effect)
3. Conclusion

### «1. Overview of Content Management System according to Embodiment of Present Disclosure»

As specifically explained in [2-1. First Embodiment] to [2-4. Fourth Embodiment] as examples, the present disclosure may be executed in a variety of forms. Meanwhile, a content acquisition device (automatic image shooting device 2) included in a content management system according to each embodiment includes
A. A content acquisition unit (image shooting unit 20 and microphone 21) configured to acquire content, and
B. A transmission unit (communication unit 25) configured to transmit, to an outside, the content acquired by the content acquisition unit and identification information unique to the content acquisition device.
   In addition,
C. The content and the identification information that have been transmitted by the transmission unit are associated with time information indicating time when the content acquisition unit has acquired the content, are stored in a storage unit (storage unit 42) included in a server (server 4), and are, in a case where the server has received the identification information and the time information from an information processing device (information processing device 7), referred to when content associated with the received identification information and the received time information is searched for from among the content stored in the storage unit and is transmitted to the information processing device.

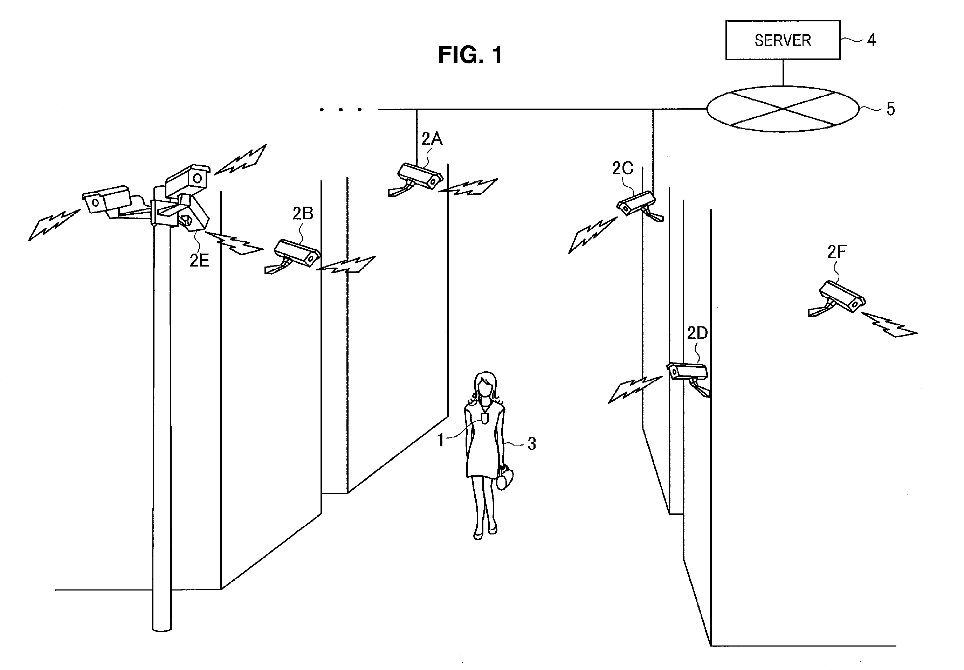

First, with reference to FIG. 1, a basic configuration of a content management system that is similar between each embodiment is explained.

FIG. 1 is an explanatory diagram showing an overview of a content management system according to an embodiment of the present disclosure. As shown in FIG. 1, automatic image shooting devices (content acquisition devices) 2A to 2F are installed at fixed points all over the outdoors, and are connected to the server 4 via a network 5. The automatic image shooting devices 2A to 2F include diverse sensors such as a camera and microphone, and continuously record images/sounds. In the content management system according to the embodiments of the present disclosure, a situation in which many automatic image shooting devices 2 are installed in indoors in addition to outdoors as shown in FIG. 1 is assumed. Hereinafter, the automatic image shooting devices 2A to 2F are referred to as automatic image shooting devices 2 in a case where it is not necessary to particularly distinguish the automatic image shooting devices 2A to 2F. In addition, video and images shot by the automatic image shooting devices 2, sounds collected by the automatic image shooting devices 2, and a combination thereof are referred to as content.

When acquiring content, the automatic image shooting devices 2 transmit signals (hereinafter, referred to as image shooting subject signals) notifying the content acquisition to a range in which the surrounding content may be acquired. Note that, the image shooting subject signal includes identification information unique to each of the automatic image shooting devices 2 (hereinafter, also referred to as identification information, simply).

Subsequently, the automatic image shooting devices 2 store the acquired content in the server 4 in association with time when the content have been acquired (time information) and identification information unique to each of the automatic image shooting devices 2. Note that, the server 4 may set time when the content and identification information have been received from the automatic image shooting device 2 as time when the automatic image shooting device 2 has acquired the content.

In order to browse the content acquired in a certain specified time by the automatic image shooting device 2, a user 3 shown in FIG. 1 designates time information and identification information unique to the automatic image shooting device 2 as a search condition for content stored in the server 4. Here, the server 4 stores huge amount of content acquired by many automatic image shooting devices 2. Accordingly, it is desirable for the user 3 to designate, as the search condition, time information and identification information that are associated with important content from among the huge amount of content.

Meanwhile, as shown in FIG. 1, the user 3 wears a wearable identification information receiving device 1 (portable device) capable of receiving image shooting subject signals transmitted by the automatic image shooting devices 2. The identification information receiving device 1 stores identification information included in the received image shooting subject signals in association with time (time information) when the automatic image shooting devices 2 have acquired content. Note that, the identification information receiving device 1 may set time when the image shooting subject signals have been received as time when the automatic image shooting devices 2 have acquired the content.

Reception of the image shooting subject signal performed by the identification information receiving device 1 means that the user 3 has been present in a range (target range) in which the automatic image shooting device 2 may acquire the content, at a time when the automatic image shooting device 2 that has transmitted the image shooting subject signal has acquired the content. That is, in the case where the identification information receiving device 1 receives the image shooting subject signal, it is highly possible that an image/sound of the user 3 is collected by the automatic image shooting device 2 that has transmitted the image shooting subject signal.

Accordingly, the user 3 can easily access important content that are stored in the server 4 and in which the image/sound of the user 3 is more likely to be recorded, by designating and searching for the time information and the identification information stored in the identification information receiving device 1 after the image shooting. That is, the time information and the identification information that are stored in the identification information receiving device 1 may also be referred to as an image shooting subject bookmark as an bookmark capable of efficiently accessing content in which an image of the user 3 is recorded from among a huge amount of content.

Not only the user 3 can easily access data in which an image of the user 3 is recorded by using the image shooting subject bookmark, but also the user 3 can protect the user 3's privacy by modifying the content stored in the server 4. For example, the user 3 can delete himself/herself from an image with the user 3 in it so as not to allow another person to browse the image with the user 3 in it.

Note that, a way to wear the identification information receiving device 1 is not limited to a way that the identification information receiving device 1 is put on the neck of the user 3 by using a string attached thereto, as shown in FIG. 1. For example, the identification information receiving device 1 may be attached to a hat, clothes, a bag, glasses, sunglasses or the like of the user 3, or may be put in a pocket of the clothes of the user 3.

The automatic image shooting devices 2 may be devices installed at fixed points as shown in FIG. 1, wearable devices worn other users, animals, and the like, devices mounted on movable bodies such as vehicles, or built-in devices built in the movable bodies. Alternatively, the automatic image shooting devices 2 may be devices held by other users such as digital cameras.

The overview of the content management system according to the embodiment of the present disclosure has been explained above. Next, such content management system is explained with reference to a plurality of embodiments.

### <<2. Embodiments>>

### <2-1. First Embodiment>

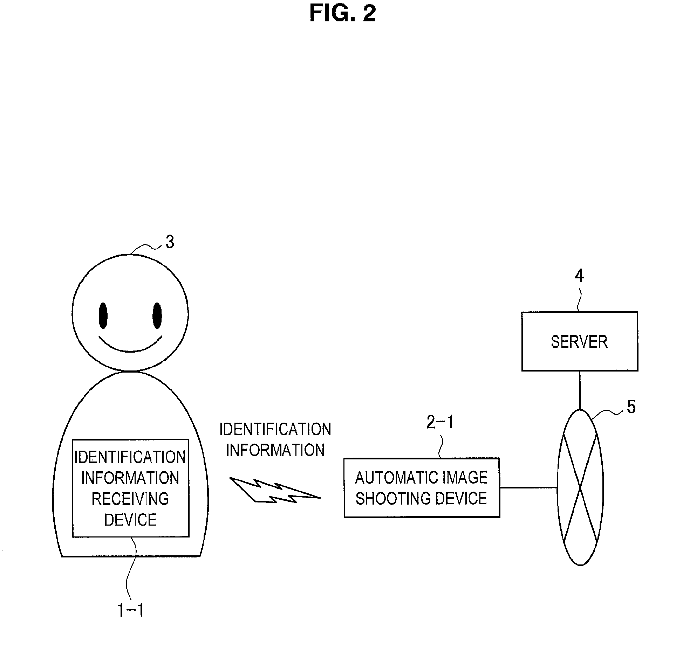

According to the present embodiment, a content management system can allow the user 3 to easily access content, and to protect privacy. Hereinafter, with reference to FIGS. 2 to 5, a configuration according to the present embodiment is explained.

### [2-1-1. Configuration]

FIG. 2 is an explanatory diagram showing a configuration of a content management system according to a first embodiment. As shown in FIG. 2, the content management system includes an identification information receiving device 1-1 worn by the user 3, an automatic image shooting device 2-1 installed around the user 3, and a server 4. In addition, the automatic image shooting device 2-1 connects to the server 4 via a network 5.

The identification information receiving device 1-1 is a wearable device capable of receiving an image shooting subject signal (including identification information) transmitted by the automatic image shooting devices 2. The identification information receiving device 1-1 stores, as the image shooting subject bookmark, identification information included in the received image shooting subject signal in association with time when the image shooting subject signal has been received.

The automatic image shooting device 2-1 continuously collects images/sounds, and transmits data (content) in which the images/sounds are recorded to the server 4. Here, as described above, the automatic image shooting device 2-1 transmits the data in which the images/sounds of the user 3 are recorded to the server 4 in association with identification information unique to the automatic image shooting device 2-1.

The network 5 is constituted of the Internet, a leased line, an Internet Protocol Virtual Private Network (IP-VPN), and the like.

The server 4 manages storage, delivery, and the like of content. For example, the server 4 stores the identification information and the content that have been transmitted from the automatic image shooting device 2-1 in association with the time when the identification information and the content have been received. Subsequently, in response to an access request from the user 3, the user 3 is provided with the content associated with the image shooting subject bookmark included in the access request.

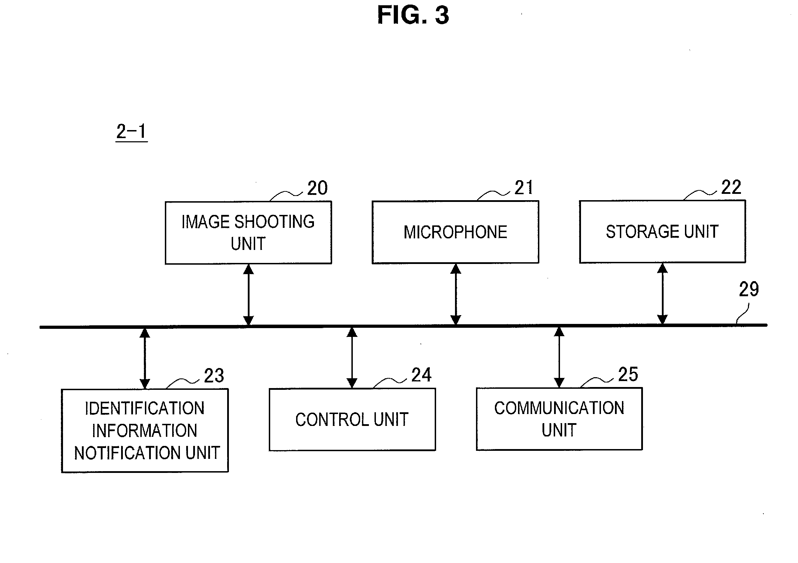

As described above, in the content management system according to the first embodiment, content acquired by the automatic image shooting device 2-1 installed around the user 3 is stored in the server 4 in association with identification information and time information. Accordingly, as described above, by using the image shooting subject bookmark, the user 3 can access content in which the image/sound of the user 3 is recorded from among the content stored in the server 4, after the image shooting. Next, with reference to FIGS. 3 to 5, configurations of the automatic image shooting device 2-1, the identification information receiving device 1, and the server 4 that are included in the content management system according to the first embodiment are explained.

### (Automatic Image Shooting Device)

FIG. 3 is a block diagram showing a configuration of the automatic image shooting device 2-1 according to the first embodiment. As shown in FIG. 3, the automatic image shooting device 2-1 includes an image shooting unit 20, a microphone 21, a storage unit 22, an identification information notification unit 23, a control unit 24, and a communication unit 25. The structural elements of the automatic image shooting device 2-1 communicate with each other via a bus 29.

### -Image Shooting Unit

The image shooting unit 20 includes an imaging optical system including image sensors and an imaging lens and a shot-image signal processing unit, and outputs data of a shot image as a digital signal. Note that, the image sensor is achieved by a charge-coupled device (CCD) imager or a complementary metal-oxide-semiconductor (CMOS) imager, for example.

### -Microphone

The microphone 21 collects surrounding sounds and outputs sound data converted into a digital signal via an amplifier, an analog-to-digital converter (ADC), and the like.

### -Storage Unit

The storage unit 22 stores content of images/sound collected by the image shooting unit 20 and the microphone 21. The storage unit 22 may store the content after compression. The storage unit 22 may be achieved by a recording medium such as a memory card or other flash memory, a Digital Versatile Disc (DVD), or a hard disk, for example.

### -Identification Information Notification Unit

The identification information notification unit 23 notifies the identification information receiving device 1 located in the periphery, of the image shooting subject signal including the identification information unique to the automatic image shooting device 2-1. The image shooting subject signal may further include information other than the identification information. In addition, the identification information notification unit 23 may set a directivity direction of notification in a manner that the image shooting subject signal is notified in a predetermined direction.

In addition, the identification information notification unit 23 may constantly notify the image shooting subject signal, or may regularly/irregularly notify the image shooting subject signal. Alternatively, the identification information notification unit 23 may perform notification based on time in a manner that the notification is not performed at night, for example. Alternatively, the identification information notification unit 23 may notify the image shooting subject signal on the basis of an image shot by the image shooting unit 20 or a detection result obtained by a motion detector (not shown), in a case where a person is present in an image shooting range (target range). Note that, the communication method of the identification information notification unit 23 is not specifically limited, and may be Wi-Fi, Bluetooth (registered trademark), ZigBee, or the like. Meanwhile, the identification information notification unit 23 may be achieved by a radio wave type information code such as an integrated circuit (IC) tag or a radio-frequency identification (RFID) tag, for example.

### -Control Unit

The control unit 24 functions as an arithmetic device and a control device to control all operations in the automatic image shooting device 2-1 in accordance with various kinds of programs. For example, the control unit 24 is achieved by a central processing unit (CPU) and microprocessors. The control unit 24 may include read only memory (ROM) for storing programs and arithmetic parameters to be used, and random access memory (RAM) for temporarily storing parameters and the like that arbitrarily change.

### -Communication Unit

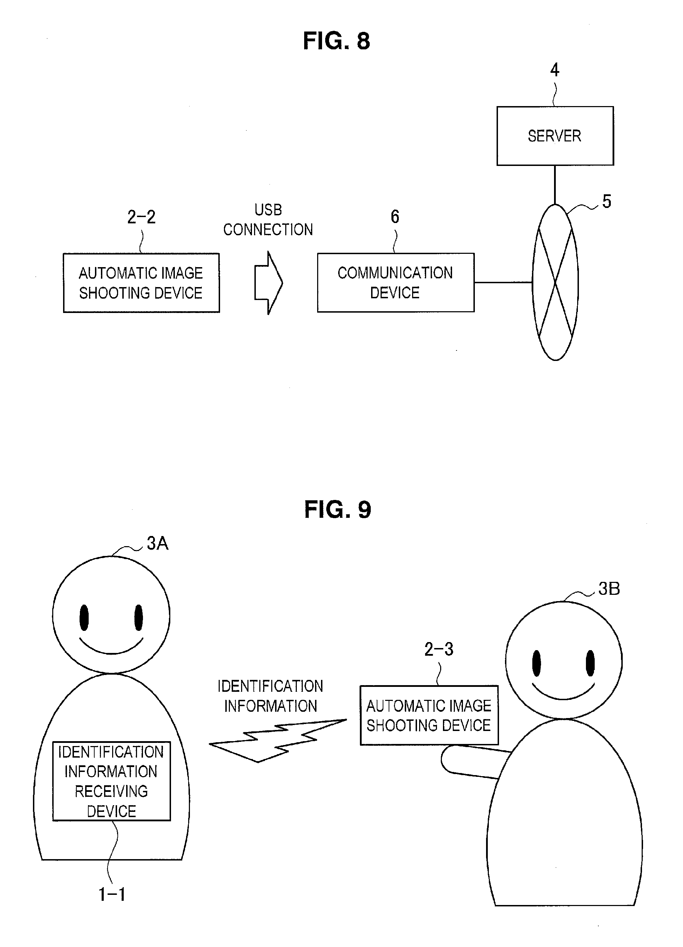

The communication unit 25 is a communication interface for performing data communication with an outside. For example, the communication unit 25 transmits the content of the images/sounds collected by the image shooting unit 20 and the microphone 21 to the server 4 via the network 5 in association with the identification information unique to the automatic image shooting device 2-1. In addition, the communication unit 25 may transmit various kinds of data stored in the storage unit 22 to the server 4 via another communication device (see communication device 6 in FIG. 8) in association with the identification information unique to the automatic image shooting device 2-1.

### (Identification Information Receiving Device)

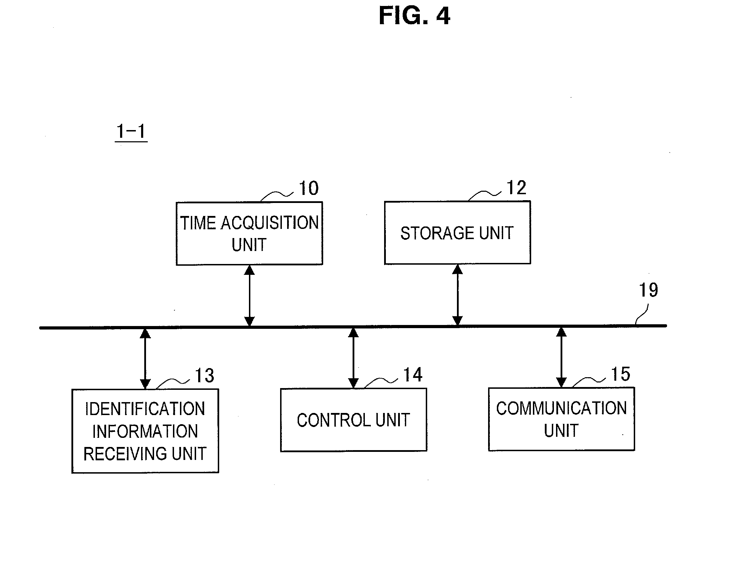

FIG. 4 is a block diagram showing a configuration of the identification information receiving device 1-1 according to the first embodiment. As shown in FIG. 4, the identification information receiving device 1-1 includes a time acquisition unit 10, a storage unit 12, an identification information receiving unit 13, a control unit 14, and a communication unit 15. The structural elements of the identification information receiving device 1-1 communicate with each other via a bus 19.

### -Identification Information Receiving Unit

The identification information receiving unit 13 receives the image shooting subject signal notified by the automatic image shooting device 2-1, or in other words, the identification information unique to the automatic image shooting device 2-1 included in the image shooting subject signal. Subsequently, the identification information receiving unit 13 outputs the received identification information to the storage unit 12. Note that, in a case where the identification information notification unit 23 is the radio wave type information code, the identification information receiving unit 13 transmits a radio wave to the identification information notification unit 23, and receives, from the identification information notification unit 23, the reflected radio wave to which the identification information is attached.

### -Time Acquisition Unit

The time acquisition unit 10 has a clock function of acquiring time when the identification information receiving unit 13 has received the image shooting subject signal, as time (time information) when the automatic image shooting device 2-1 has received the content. The time acquisition unit 10 outputs the time information to the storage unit 12.

### -Control Unit

The control unit 14 functions as an arithmetic device and a control device to control all operations in the identification information receiving device 1-1 in accordance with various kinds of programs. For example, the control unit 14 may have a function as a storage control unit for storing the identification information received by the identification information receiving unit 13 in the storage unit 12 in association with the time information acquired by the time acquisition unit 10. For example, the control unit 14 is achieved by a CPU and microprocessors. The control unit 24 may include ROM for storing programs and arithmetic parameters to be used, and RAM for temporarily storing parameters and the like that arbitrarily change.

### -Storage Unit

The storage unit 12 stores the image shooting subject bookmark under control of the control unit 14. Here, as described above, the image shooting subject bookmark is the identification information included in the image shooting subject signal received by the identification information receiving device 13, and the time information indicating time when the identification information receiving device 13 has received the image shooting subject signal. Note that, the storage unit 12 may store encrypted image shooting subject bookmark in case the user 3 loses the identification information receiving device 1-1, for example. The storage unit 22 may be achieved by a recording medium such as a memory card or other flash memory, a DVD, or a hard disk, for example.

### -Communication Unit

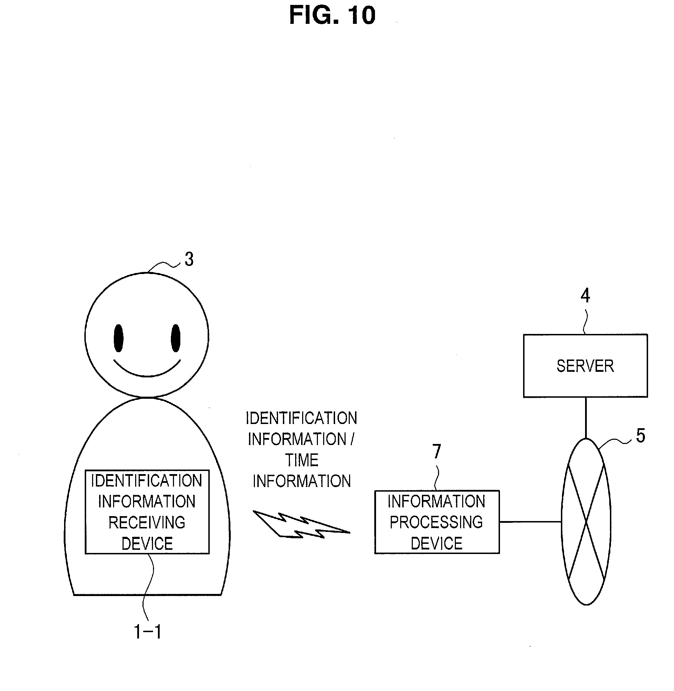

The communication unit 15 is a communication interface for performing data communication with an outside. For example, the communication unit 15 may transmit the image shooting subject bookmark stored in the storage unit 12 to the server 4 via the network 5, and may receive content corresponding to the image shooting subject bookmark. Alternatively, the communication unit 15 may transmit the image shooting subject bookmark stored in the storage unit 12 to the server 4 via another information processing device (see information processing device 7 in FIG. 10), and may receive content corresponding to the image shooting subject bookmark.

### (Server)

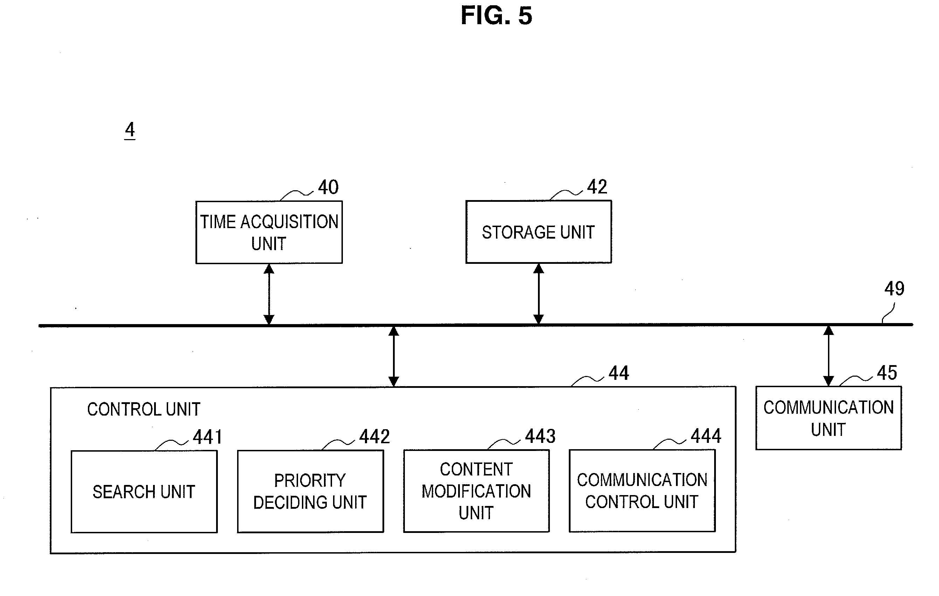

FIG. 5 is a block diagram showing a configuration of the server 4 according to the first embodiment. As shown in FIG. 5, the server 4 includes a time acquisition unit 40, a storage unit 42, a control unit 44, and a communication unit 45. The structural elements of the server 4 communicate with each other via a bus 49.

### -Communication Unit

The communication unit 45 is a communication interface for performing data communication with an outside. For example, the communication unit 45 may receive the content acquired by the automatic image shooting device 2-1 and the identification information unique to the automatic image shooting device 2-1 from the automatic image shooting device 2-1 or another communication device (see communication device 6 in FIG. 8). In addition, the communication unit 45 may provide the user 3 with content according to the access request. Specifically, the image shooting subject bookmark may be received from the identification information receiving device 1 or another information processing device (see information processing device 7 in FIG. 10). Subsequently, the communication unit 45 may transmit the content stored in the storage unit 42 to the identification information receiving device 1 or the another information processing device.

### -Time Acquisition Unit

The time acquisition unit 40 has a clock function of acquiring time when the communication unit 45 has received the identification information and the content, as time (time information) when the automatic image shooting device 2-1 has received the content. The time acquisition unit 40 outputs the time information to the storage unit 42.

### -Storage Unit

The storage unit 42 stores the identification information and the content that have been output from the communication unit 45 in association with the time information output from the time acquisition unit 40. The storage unit 42 may be achieved by a recording medium such as a memory card or other flash memory, a DVD, or a hard disk, for example.

### -Control Unit

The control unit 44 functions as an arithmetic device and a control device to control all operations in the server 4 in accordance with various kinds of programs. For example, the control unit 44 is achieved by a CPU and microprocessors. The control unit 44 may include ROM for storing programs and arithmetic parameters to be used, and RAM for temporarily storing parameters and the like that arbitrarily change. In addition, the control unit 44 functions as a search unit 441, a priority deciding unit 442, a content modification unit 443, and communication control unit 444.

### -Search Unit

In a case where the communication unit 45 receives the image shooting subject bookmark, the search unit 441 searches for content associated with the received image shooting subject bookmark from among content stored in the storage unit 42. Specifically, the search unit 441 outputs, as a search result, content whose time is the same as time indicated by the time information included in the image shooting subject bookmark, from among content acquired by the automatic image shooting device 2-1 indicated by the identification information included in the image shooting subject bookmark.

### -Priority Deciding Unit

The priority deciding unit 442 decides a priority of the content searched for by the search unit 441 on the basis of a predetermined rule. The priority deciding unit 442 has a role as a filter through which the communication unit 45 provides the user 3 with more important content. For example, the priority deciding unit 442 decides a priority on the basis of information associated with the content or details in the content. For example, the priority deciding unit 442 may decide a priority in the content acquired by a single automatic image shooting device 2-1. Alternatively, the priority deciding unit 442 may decide a priority in the content acquired by a plurality of automatic image shooting devices 2-1.

### -Content Modification Unit

The content modification unit 443 modifies content stored in the storage unit 42. For example, in a case where the content is an image, the content modification unit 443 performs modification in a manner that a distinguishability of a face region of a specific person in the content deteriorates, in a manner that the face region is replaced with another image, or in a manner that a whole person is deleted. Subsequently, the modified content is stored in the storage unit 42.

### -Communication Control Unit

The communication control unit 444 controls data communication between the communication unit 45 and an outside. For example, the communication control unit 444 controls the communication unit 45 to transmit the content searched for by the search unit 441 to the identification information receiving device 1 that is a transmission source of the image shooting subject bookmark or the another information processing device (see information processing device 7 in FIG. 10). In this case, the communication control unit 444 may transmit the content on the basis of the priority decided by the priority deciding unit 442. In addition, the communication control unit 444 may also transmit access permission information to permit only browsing of the content on the server 4, or to permit download (saving) of the content from the server 4.

### [2-1-2. Content Collecting Operation]

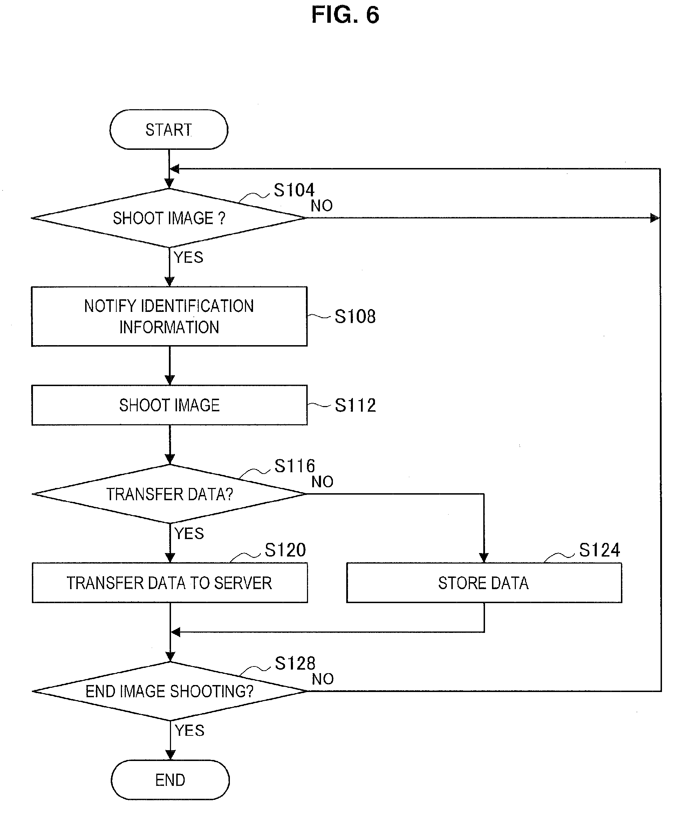

Next, with reference to FIGS. 6 to 7, a content collecting operation performed by a content management system according to the present embodiment is explained.

FIG. 6 is a flowchart showing an operation process of the automatic image shooting device 2-1 according to the first embodiment. In the present specification, hereinafter, content of an image shot by the image shooting unit 20 is especially explained.

First, in Step S104, the control unit 24 determines whether the image shooting unit 20 shoots an image. For example, the control unit 24 may determine that images are shot constantly, or may determine that images are shot at predetermined time intervals. Alternatively, the control unit 24 may perform the determination on the basis of whether the image shooting unit 20 is running. Alternatively, on the basis of the image shooting unit 20 or a motion detector (not shown), the control unit 24 may determine that images are shot in a case where the user 3 is included in the image shooting range. Alternatively, the control unit 24 may determine that images are shot in a case where the user 3 reaches a position where high-quality content can be acquired as images, such as the center of the image shooting range.

In a case where it is determined that an image is not shot (NO in Step S104), the process proceeds to Step S104 again immediately after the decision or after a predetermined time is elapsed.

On the other hand, in a case where it is determined that an image is shot, (YES in Step S104), the identification information notification unit 23 notifies the identification information receiving device 1-1 located in the periphery, of the image shooting subject signal including identification information unique to the automatic image shooting device 2-1, in Step S108.

Next, in Step S 112, the image shooting unit 20 shoots an image. At this time, the image shooting unit 20 may adjust an image shooting parameter such as aperture of a lens or a shutter speed, so as to focus on a person included in the image shooting range, for example.

Subsequently, in Step S116, the control unit 24 determines whether the communication unit 25 transfers content of the image shot by the image shooting unit 20 to the server 4. For example, the control unit 24 may determine that the content is transferred constantly, or may determine that the content is transferred at predetermined time intervals.

In a case where it is determined that the content is transferred (YES in Step S116), the communication unit 25 transmits the content of the image shot by the image shooting unit 20 and the identification information unique to the automatic image shooting device 2-1 to the server 4 via the network 5 in Step S120. At this time, the server 4 may set time when the content and identification information have been received from the communication unit 25 as time when the automatic image shooting device 2 has acquired the content, and stores the time in the storage unit 42 in association with the identification information.

On the other hand, in a case where it is determined that the content is not transferred (NO in Step S116), the storage unit 22 stores the content of the image shot by the image shooting unit 20 in Step S124. Subsequently, when a next transfer is performed, the communication unit 25 transmits the content stored in the storage unit 22 to the server 4.

Next, in Step S128, the control unit 24 determines whether to end the image shooting. For example, the control unit 24 may perform determination in accordance with time in a manner that images are not shot at night, for example. In a case where it is determined to end the image shooting (YES in Step S128), the process ends. In a case where it is determined not to end the image shooting (NO in Step S128), the process proceeds to Step S104 again.

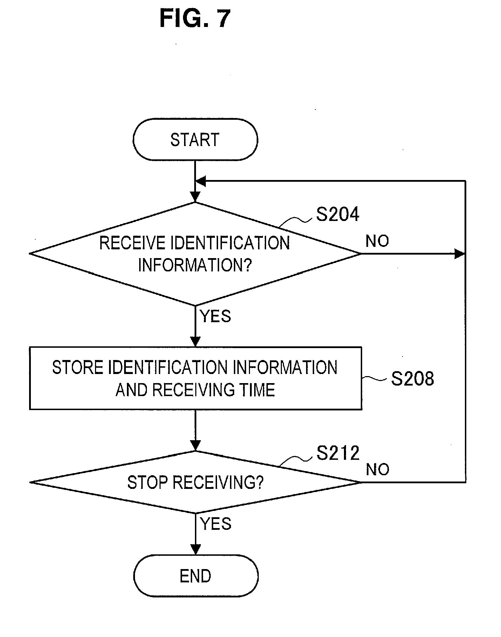

FIG. 7 is a flowchart showing an operation process of the identification information receiving device 1-1 according to the first embodiment.

First, in Step S204, the control unit 14 determines whether the identification information receiving unit 13 has received the image shooting subject signal.

Next, in a case where it is determined that the image shooting subject signal has not been received (NO in Step S204), the process proceeds to Step S204 again immediately after the decision or after a predetermined time is elapsed.

On the other hand, in a case where it is determined that the image shooting subject signal has been received (YES in Step S204), the storage unit 12 stores an image shooting subject bookmark associated with the identification information included in the received image shooting subject signal and the time information indicating time when the image shooting subject signal has been received, in Step S208.

Subsequently, in Step S212, the control unit 14 determines whether to stop receiving the image shooting subject signal. For example, the control unit 14 may perform determination in accordance with time in a manner that the reception is stopped at night. In a case where it is determined to stop receiving the image shooting subject signal (YES in Step S212), the process ends. In a case where it is determined not to stop receiving the image shooting subject signal (NO in Step S212), the process proceeds to Step S204 again.

### (Supplement)

When receiving the content in Step S120, the server 4 may analyze the content, recognize a face, pinpoint the user 3 included in the content, and notify the user 3 of the image shooting performed by the automatic image shooting device 2-1. For example, a terminal having a display unit such as a portable smartphone receives a notification, and the user 3 recognizes that an image of the user 3 is shot and can adjust his/her clothes.

Meanwhile, in Step S120, the communication unit 25 may not be able to communicate with the server 4 due to failure in the network 5, or the communication unit 25 may not have a data communication function via the network 5. With reference to FIG. 8, an operation process in such cases is explained.

FIG. 8 is an explanatory diagram showing an example of a transmission process of content stored in an automatic image shooting device 2 according to the first embodiment. As shown in FIG. 8, an automatic image shooting device 2-2 whose communication unit 25 does not have the data communication function using the network 5 transmits data stored in the storage unit 22 to a communication device 6 having such communication function using Universal Serial Bus (USB) connection or the like. Next, the communication device 6 transmits the transmitted data to the server 4 via the network 5. For example, such communication device 6 is achieved by a personal computer (PC), a smartphone, or a mobile phone.

Note that, when receiving the content, the automatic image shooting device 2-2 stores the content in the storage unit 22 in association with the time information indicating the time when the content has been acquired. Subsequently, the automatic image shooting devices 2-2 transmits the content, the identification information, and the time information to the server 4 via the USB connection or the like with the communication device 6. At this time, the server 4 stores the received content, identification information, and time information in the storage unit 42 in association with each other. This is because, although the automatic image shooting device 2-1 transmits the data immediately after acquiring content and time when the server 4 has received data is substantially the same as time when the content has been acquired, time when data has been received from the automatic image shooting device 2-2 is different from the time when the content has been acquired.

In addition, as described above, the automatic image shooting device 2 may be a device installed at a fixed point, a wearable device worn by the user 3, a device mounted on a movable body such as a vehicle, a built-in device built in the movable body, a device held by the user 3 such as a digital camera, or the like. As an example, with reference to FIG. 9, a wearable automatic image shooting device 2 worn by the user 3 is explained.

FIG. 9 is an explanatory diagram showing an example of a content management system according to the first embodiment. As shown in FIG. 9, a wearable automatic image shooting device 2-3 worn by a user 3B shoots an image of a user 3A through the eyes of the user 3B. More specifically, the automatic image shooting device 2-3 notifies an image shooting subject signal at a same time when the user 3B shoots an image. At this time, the identification information receiving device 1-1 receives the image shooting subject signal notified by the automatic image shooting device 2-3. Accordingly, the user 3A can access the content of the image shot through the eyes of the user 3B by using the identification information received from the automatic image shooting device 2-3.

Note that, the automatic image shooting device 2-3 may be worn by the user 3A having the identification information receiving device 1-1.

### [2-1-3. Access to Content]

The content collecting operation performed by the content management system according to the present embodiment has been explained. Next, access to content performed by a content management system according to the present embodiment is explained. As described above, by using the image shooting subject bookmark, the user 3 can access content in which the image/sound of the user 3 have been recorded and that has been stored in the server 4. Here, accesses from any information processing device to content associated with an image shooting subject bookmark is explained. First, with reference to FIG. 10, an overview of access to content using any information processing device is explained.

FIG. 10 is an explanatory diagram illustrating an overview of access to content performed by a content management system according to the first embodiment. As shown in FIG. 10, the user 3 accesses content stored in the server 4 by using an information processing device 7 connecting to the server 4 via the network 5.

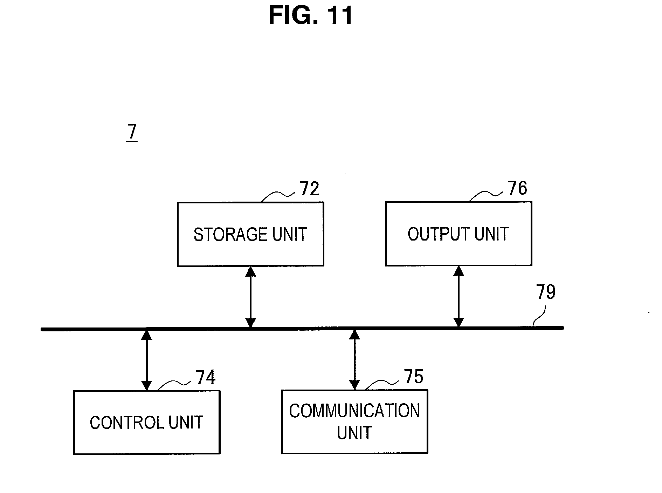

The information processing device 7 has a communication function, receives an image shooting subject bookmark constituted of identification information and time information from the identification information receiving device 1-1, and generates an access request including the image shooting subject bookmark. At this time, the information processing device 7 may include specifying information for specifying the user 3 in the access request. Subsequently, the information processing device 7 transmits the access request to the server 4, and receives content corresponding to the access request from the server 4. Hereinafter, with reference to FIGS. 11 to 12, a configuration and an operation process of the information processing device 7 are explained sequentially.

### (Configuration of Information Processing Device 7)

FIG. 11 is a block diagram showing a configuration of the information processing device 7 according to the first embodiment. As shown in FIG. 11, the information processing device 7 includes a storage unit 72, a control unit 74, a communication unit 75, and an output unit 76. The structural elements of the information processing device 7 communicate with each other via a bus 79.

### -Communication Unit

The communication unit 75 is a communication interface for performing data communication with an outside. For example, the communication unit 75 may receive the access request including the specifying information and the image shooting subject bookmark from the identification information receiving device 1-1, and may transmit the received specifying information and image shooting subject bookmark to the server 4 via the network 5. Alternatively, the communication unit 75 may receive content associated with the transmitted image shooting subject bookmark from the server 4.

### -Storage Unit

The storage unit 72 stores the image shooting subject bookmark received from the identification information receiving device 1-1 and the content received from the server 4, via the communication unit 75. The storage unit 72 may be achieved by a recording medium such as a memory card or other flash memory, a DVD, or a hard disk, for example.

### -Output Unit

The output unit 76 outputs the content associated with the image shooting subject bookmark. The output unit 76 may output, in real time, content received via the communication unit 75, or may output content stored in the storage unit 72. For example, the output unit 76 is achieved by a cathode ray tube (CRT) display device, a liquid-crystal display (LCD) device, or the like.

### -Control Unit

The control unit 74 functions as an arithmetic device and a control device to control all operations in the information processing device 7 in accordance with various kinds of programs. For example, the control unit 74 may have a function as an output control unit for controlling the output unit 76 to output the content that has been received via the communication unit 75 and associated with the image shooting subject bookmark. For example, the control unit 74 is achieved by a CPU and microprocessors. The control unit 74 may include ROM for storing programs and arithmetic parameters to be used, and RAM for temporarily storing parameters and the like that arbitrarily change.

### (Operation Process of Information Processing Device 7)

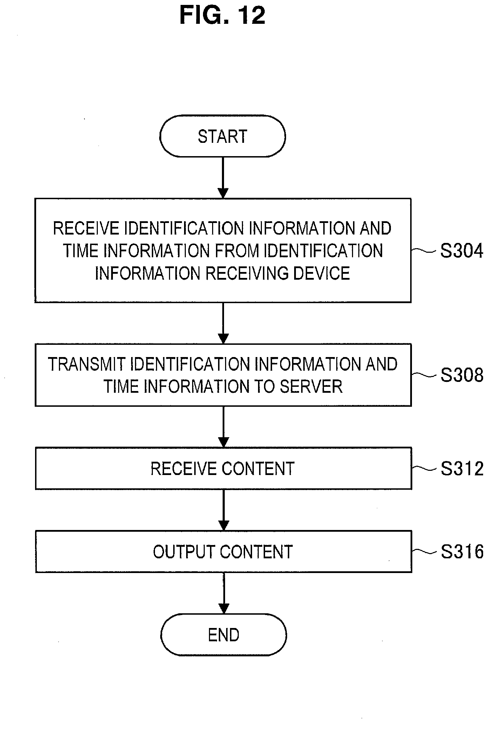

Next, with reference to FIG. 12, a content information access operation according to the present embodiment is explained. FIG. 12 is a flowchart showing an operation process of the information processing device 7 according to the first embodiment.

First, in Step S304, the communication unit 75 receives an image shooting subject bookmark constituted of identification information and time information from the identification information receiving device 1-1.

Next, in Step S308, the communication unit 75 transmits the image shooting subject bookmark received from the identification information receiving device 1-1 to the server 4.

Subsequently, in Step S308, the communication unit 75 receives content that is stored in the server 4 and associated with the transmitted image shooting subject bookmark.

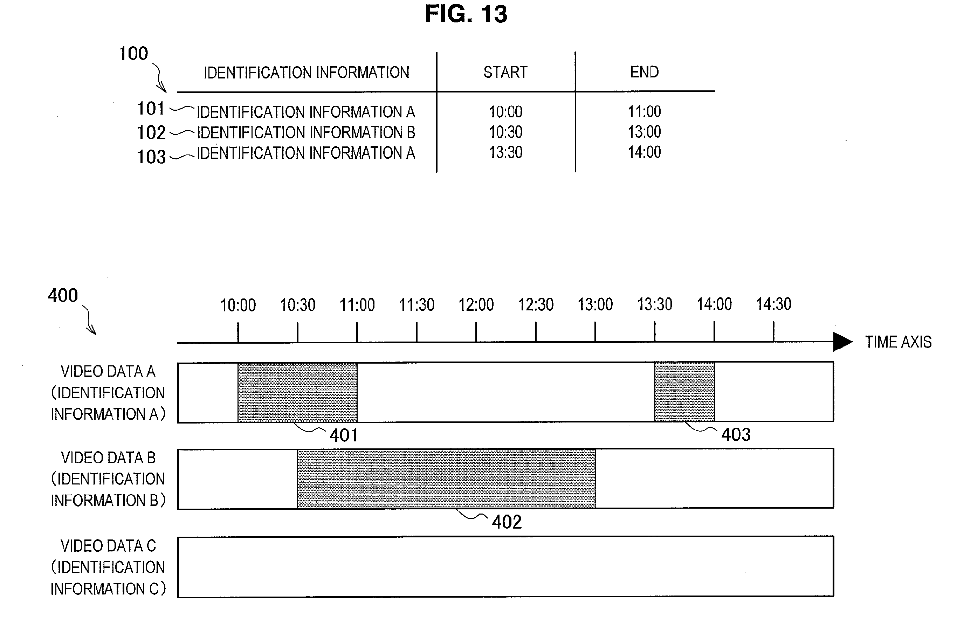

Finally, in Step S316, the output unit 76 outputs the content that has been received by the communication unit 75 and associated with the image shooting subject bookmark. Here, with reference to FIG. 13, the content that is associated with the image shooting subject bookmark and that is to be output from the output unit 76 is explained in detail.

FIG. 13 is an explanatory diagram showing an example of access to content according to the first embodiment. FIG 13 shows examples of identification information, an example of an image shooting subject bookmark 100 indicating identification information and time when the identification information (image shooting subject signal) has been started to be received and time when the reception has been ended, and an example of content 400 stored in the server 4.

As shown in FIG. 13, an image shooting subject bookmark 101 is constituted of identification information A and time information indicating time period from 10:00 to 11:00, and corresponds to content 401 of time period from 10:00 to 11:00 associated with the identification information A. That is, the content 401 is associated with the image shooting subject bookmark 101. In a similar way, content 402 and content 403 are associated with an image shooting subject bookmark 102 and an image shooting subject bookmark 103, respectively.

Accordingly, in Step S308 to S312, when the communication unit 75 transmits the image shooting subject bookmark 100 to the server 4, the server transmits the content 401, 402, and 403 to the information processing device 7, and the output unit 76 outputs these content.

### (Supplement)

Note that, as shown by the image shooting subject bookmark 100 in FIG. 13, the identification information receiving device 1 assembles time when image shooting subject signals have been continuously received, calculates time when the image shooting subject signals have been started to be received and time when the reception have been ended, and makes an image shooting subject bookmark.

The example that the identification information receiving device 1-1 transmits the image shooting subject bookmark to the server 4 via the information processing device 7 and accesses associated content has been explained. However, the present disclosure is not limited thereto. For example, the identification information receiving device 1-1 may transmit an image shooting subject bookmark to the server 4 via the network 5, and may access associated content.

In addition, the user 3 can share content of shot images of the user 3 with other people such as his/her friend and family by giving an image shooting subject bookmark to the other people. For example, the user 3 can share, with his/her friends, content of images of the user 3 and his/her friends shot during a trip by giving a part of image shooting subject bookmarks in which a date when the user 3 has gone on the trip with his/her friends is designated to his/her friends.

### [2-1-4. Content Modification]

The access to content performed by the content management system according to the present embodiment has been explained. Next, content modification performed by a content management system according to the present embodiment is explained. As described above, by using the image shooting subject bookmark, the user 3 can modify content stored in the server 4 and protect privacy.

Specifically, the user 3 transmits an image shooting subject bookmark and specifying information for specifying the user 3 to the server 4 via the information processing device 7, and the communication unit 25 of the server 4 receives the image shooting subject bookmark and the specifying information. Subsequently, the server 4 modifies image content associated with the image shooting subject bookmark and stores the modified image content in the storage unit 42 in a manner that a distinguishability of a face region of a person specified by the specifying information deteriorates. For example, the user 3 can perform, on whole appearance or a face of the user 3 in an image, an overwriting process with a predetermined image, a mosaic process, a blur process, or a process to delete whole appearance of the user 3. In such a way, the user 3 can prevent other people from browsing a picture including a face expression that the user 3 does not like, for example.

### [2-1-5. Effect]

As described above, operations such as a press of a shutter button is not necessary for the automatic image shooting device 2 according to the present embodiment. Accordingly, the user 3 can access, or in other words, acquire content of shot images of the user 3 without bearing a burden of image shooting. In addition, since many automatic image shooting devices 2 are installed in many places and shoot images automatically, the user 3 can acquire, as content, natural facial expressions and movements with little awareness of image shooting, and momentary happening without missing them.

For example, in a case of an event such as a wedding, an entrance ceremony, or a graduation ceremony, the user 3 can acquire content including many images of the user 3 shot by the automatic image shooting devices 2. Alternatively, in a case of a leisure facility such as an amusement park or a zoo, the user 3 can acquire content of images shot by cameras installed at fixed points of rides during riding. In addition, the user 3 can enjoy the leisure itself since the user 3 does not bear a burden of image shooting.

In addition, the server 4 can provide the user 3 with only content associated with an image shooting subject bookmark. Accordingly, the server 4 can limit access from a third party having no image shooting subject bookmark to content of shot images of the user 3, and can protect privacy of the user 3. However, the user 3 can share content of images of the user 3 shot with other people by sharing an image shooting subject bookmark with the other people. In another way, by using the image shooting subject bookmark, the user 3 can modify content stored in the server 4 and protect privacy.

In a case of image shooting performed by a normal installed camera, the user 3 has communication mechanism such as a radio-frequency tag, and shoots images on the basis of detecting identification information transmitted from such communication means, for example. Subsequently, the user 3 acquires content associated with the identification information of the radio-frequency tag held by the user 3, from among a huge amount of content stored in the server. That is, a normal server stores content in association with a so-called image shooting bookmark indicating that an image of the user 3 has been shot. On the other hand, the image shooting subject bookmark according to the embodiments of the present disclosure is stored in the identification information receiving device 1, and the server 4 does not store any information indicating that an image of the user 3 has been shot in association with content. The embodiments of the present disclosure differ widely from a normal case in this point. In addition, since the server 4 does not store the information indicating that an image of the user 3 has been shot in association with content, capacity of the storage unit 22 can be reduced. Moreover, the user 3 can manage bookmark information of the user 3 by using the identification information receiving device 1 or the information processing device 7 without accessing the server 4.

### <2-2. Second Embodiment>

In the content management system according to the present embodiment, the server 4 can provide the user 3 with content to which a priority has been attached on the basis of a predetermined rule. Note that, the rule that the content management system attaches a priority to content is diverse. Hereinafter, examples of a process that the content management system decides a priority are described.

### [2-2-1. Priority Deciding Process 1]

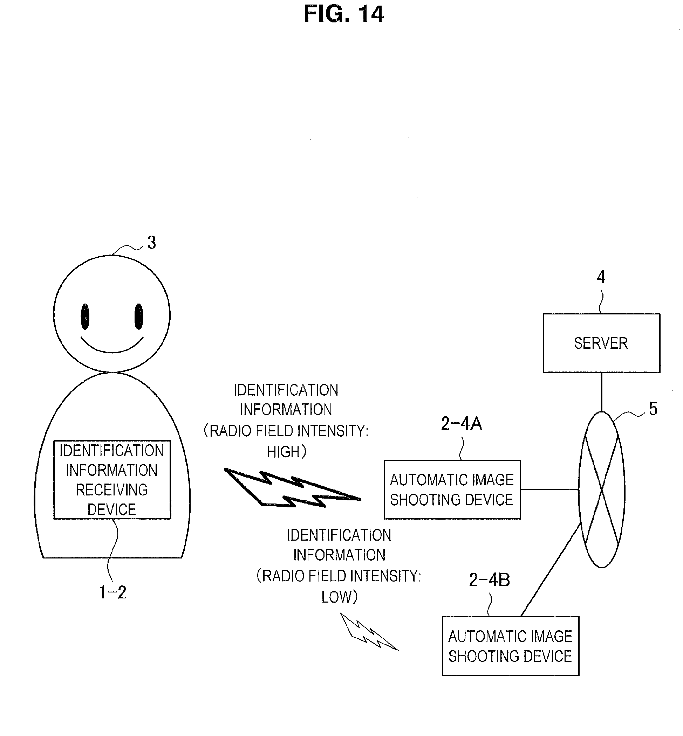

The priority deciding unit 442 may decide a priority on the basis of radio field intensity at a time when the image shooting subject signal is received. Hereinafter, with reference to FIG. 14, such priority deciding process is explained.

FIG. 14 is an explanatory diagram showing an example of a priority deciding process according to the second embodiment. As shown in FIG. 14, automatic image shooting devices 2-4A and 2-4B shoot images of the user 3, and an identification information receiving device 1-2 receives image shooting subject signals including identification information from the automatic image shooting devices 2-4A and 2-4B. Here, the image shooting subject signals are radio waves. According to distance, radio field intensity at a time when the identification information receiving device 1-2 receives the radio wave decreases. Accordingly, the identification information receiving device 1-2 receives a strong image shooting subject signal from the automatic image shooting device 2-4A located at a short distance, and receives a weak image shooting subject signal from the automatic image shooting device 2-4B located at a long distance. Note that, the automatic image shooting devices 2-4A and 2-4B are referred to as automatic image shooting devices 2-4 in a case where it is not necessary to particularly distinguish the automatic image shooting devices 2-4A and 2-4B.

The identification information receiving device 1-2 stores, as the image shooting subject bookmark, identification information included in a image shooting subject signal, time when the image shooting subject bookmark has been received, and radio field intensity at a time when the identification information receiving unit 13 receives the image shooting subject signal in association with each other in the storage unit 12. Subsequently, the identification information receiving device 1-2 transmits the image shooting subject bookmark constituted of the identification information, the time information, and the radio field intensity to the server 4 via the network 5 or the information processing device 7.

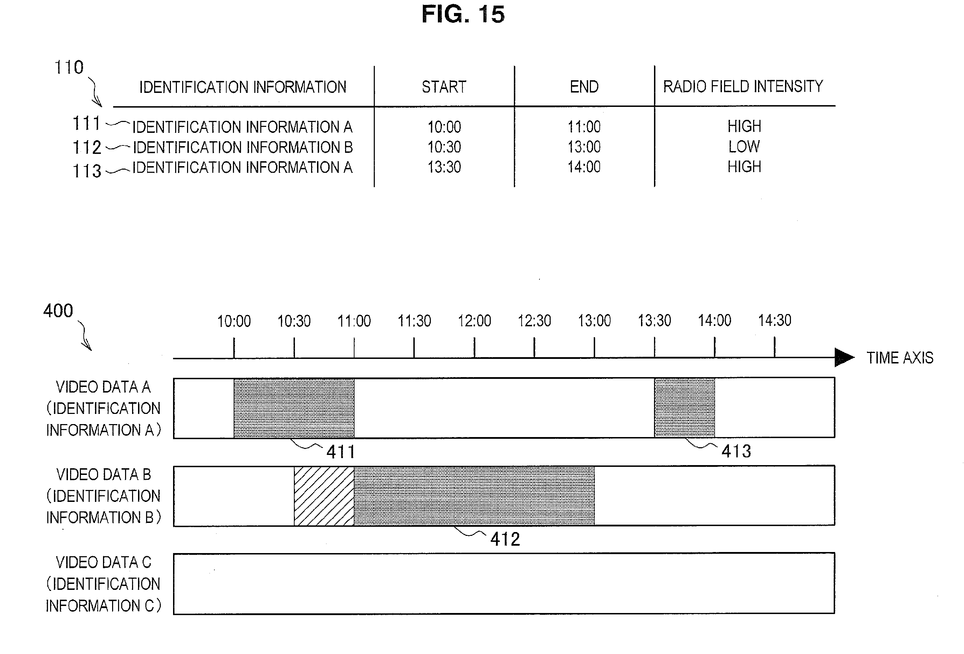

Subsequently, in the server 4, the communication unit 25 receives the image shooting subject bookmark including the radio field intensity, and the priority deciding unit 442 decides a priority on the basis of the radio field intensity. Specifically, the search unit 441 searches for content of a shot image of the user 3 on the basis of the identification information and the time information included in the image shooting subject bookmark. Next, the priority deciding unit 442 decides a priority of the content searched for by the search unit 441 on the basis of the radio field intensity included in the image shooting subject bookmark. For example, the priority deciding unit 442 may determines that content associated with an image shooting subject bookmark having higher radio field intensity is content acquired by an automatic image shooting device 2-4 close to the user 3, and gives a high priority to the content. Hereinafter, with reference to FIG. 15, details of a priority deciding process based on radio field intensity are explained.

FIG. 15 is an explanatory diagram showing an example of access to content according to the second embodiment. FIG 15 shows an example of an image shooting subject bookmark 110 including radio field intensity, and an example of content 400 stored in the server 4.

As shown in FIG. 15, an image shooting subject bookmark 111 and an image shooting subject bookmark 112 are overlapped from 10:30 to 11:00. Here, radio field intensity of the image shooting subject bookmark 111 is higher than radio field intensity of the image shooting subject bookmark 112. Accordingly, during the overlapping time from 10:30 to 11:00, the user 3 is provided with content associated with identification information A, and the user 3 is not provided with content associated with identification information B.

Accordingly, when the communication unit 75 transmits the image shooting subject bookmark 110 including radio field intensity to the server 4, the server transmits the content 411, 412, and 413 to the information processing device 7, and the output unit 76 outputs these content.

### [2-2-2. Priority Deciding Process 2]

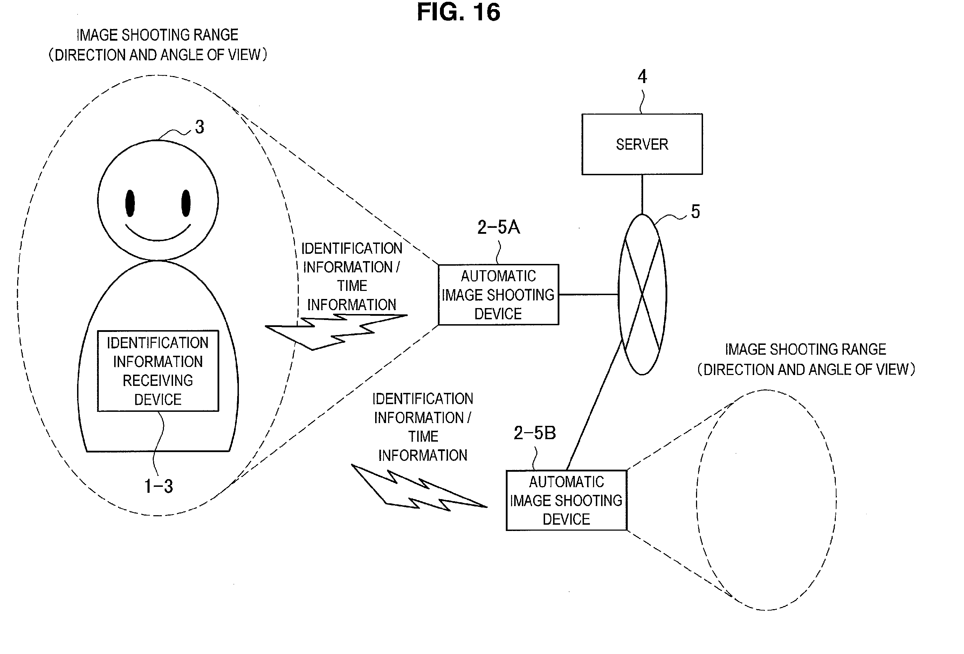

The priority deciding unit 442 may decide a priority on the basis of image shooting ranges of the automatic image shooting devices 2 and a location of the user 3. Hereinafter, with reference to FIG. 16, such priority deciding process is explained.

FIG. 16 is an explanatory diagram showing an example of a priority deciding process according to the second embodiment. As shown in FIG. 16, via identification information notification units 23, an automatic image shooting device 2-5A and an automatic image shooting device 2-5B notify an identification information receiving device 1-3 of image shooting subject signals including identification information and range information indicating image shooting subject ranges in which an image of content is shot. In addition, the identification information receiving device 1-3 has a function of detecting a current location of the identification information receiving device 1-3 by receiving a radio wave from a global positioning system (GPS) satellite, for example. Note that, the automatic image shooting devices 2-5A and 2-5B are referred to as automatic image shooting devices 2-5 in a case where it is not necessary to particularly distinguish the automatic image shooting devices 2-5A and 2-5B.

The identification information receiving device 1-3 stores, as the image shooting subject bookmark, the identification information, the range information, time information, and location information indicating a location of the identification information receiving device 1-3 at a time indicated by the time information, in association with each other in the storage unit 12, the identification information and the range information being included in the received image shooting subject signal. Subsequently, the identification information receiving device 1-3 transmits the image shooting subject bookmark constituted of the identification information, the range information, the time information, and the location information to the server 4 via the network 5 or the information processing device 7.

Subsequently, in the server 4, the communication unit 45 receives the image shooting subject bookmark including the location information and the range information, and the priority deciding unit 442 decides a priority on the basis of the location information and the range information. Specifically, the priority deciding unit 442 gives a high priority to content that image shooting ranges of the automatic image shooting devices 2-5 indicated by range information at identical time include a location of the identification information receiving device 1-3 indicated by location information. Subsequently, the priority deciding unit 442 gives a more higher priority to content that the identification information receiving device 1-3 is located at a center of an image shooting range of an automatic image shooting device 2-5, for example.

Here, the image shooting range of the automatic image shooting device 2-5 is decided in accordance with information indicating a location, an angle of view, and a direction of the automatic image shooting device 2-5. Accordingly, the automatic image shooting device 2-5 has a function of detecting a current location of the automatic image shooting device 2-5 by receiving a radio wave from a GPS satellite, for example. In addition, the automatic image shooting device 2-5 may notify the identification information receiving device 1-3 of information indicating a location, an angle of view, and a direction of the automatic image shooting device 2-5, as the range information. In a case where the automatic image shooting device 2-5 is installed at a fixed point, the server 4 may manage the location of the automatic image shooting device 2-5, and an image shooting subject signal of which the automatic image shooting device 2-5 notifies the identification information receiving device 1-3 does not have to include information indicating a current location of the automatic image shooting device 2-5.

### [2-2-3. Priority Deciding Process 3]

The priority deciding unit 442 may decide a priority on the basis of identification information associated with content. For example, in accordance with image shooting ability of lenses, image sensors, and the like of the automatic image shooting devices 2 indicated by identification information, the priority deciding unit 442 may give a high priority to content acquired by one of the automatic image shooting devices 2 having high image shooting ability.

### [2-2-4. Priority Deciding Process 4]

The priority deciding unit 442 may decide a priority on the basis of a distinguishability of the user 3 included in content. For example, in a case where the content is an image, the priority deciding unit 442 may give a high priority to content in which a face region of the user 3 has a high distinguishability. Alternatively, the priority deciding unit 442 may give a high priority to content in which an image of the user 3 with a smile has been shot.

Accordingly, the information processing device 7 transmits an image shooting subject bookmark and information for a face recognition process performed by the server 4 to the server4. For example, the information processing device 7 may transmit an image of a face of the user 3. Alternatively, in a case where the storage unit 42 of the server 4 stores the image of the face of the user 3 in association with specifying information for specifying the user 3, the information processing device 7 may transmits the specifying information to the server 4.

### (Supplement)

The example that, in the server 4, the search unit 441 searches for content associated with an image shooting subject bookmark from among content stored in the storage unit 42 and the priority deciding unit 442 decides a priority has been explained above. However, the present disclosure is not limited thereto. For example, the control unit 74 of the information processing device 7 may function as the search unit and the priority deciding unit, search for content associated with an image shooting subject bookmark from among content stored in the storage unit 42 of the server 4, and subsequently decide a priority.

### [2-2-5. Effect]

As explained above, the content management system according to the present embodiment can provide the user 3 with content to which a priority has been attached on the basis of diverse rules. Accordingly, the user 3 can easily acquire not content of mere shot images of the user 3, but important content from among such content.

### <2-3. Third Embodiment>

In the content management system according to the present embodiment, the automatic image shooting device 2 can acquire content in response to a trigger signal (content acquisition request signal) transmitted by the user 3.

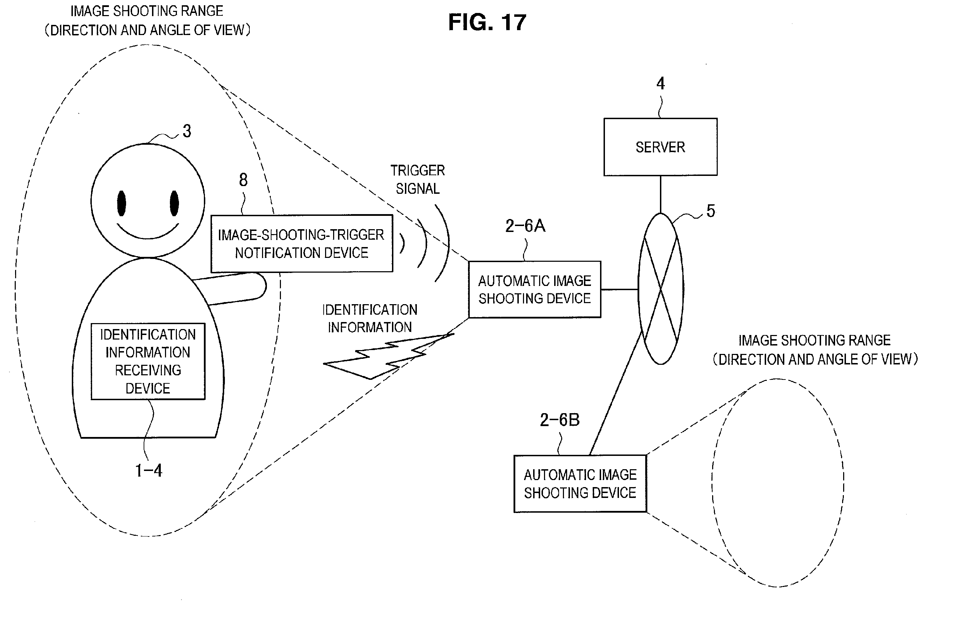

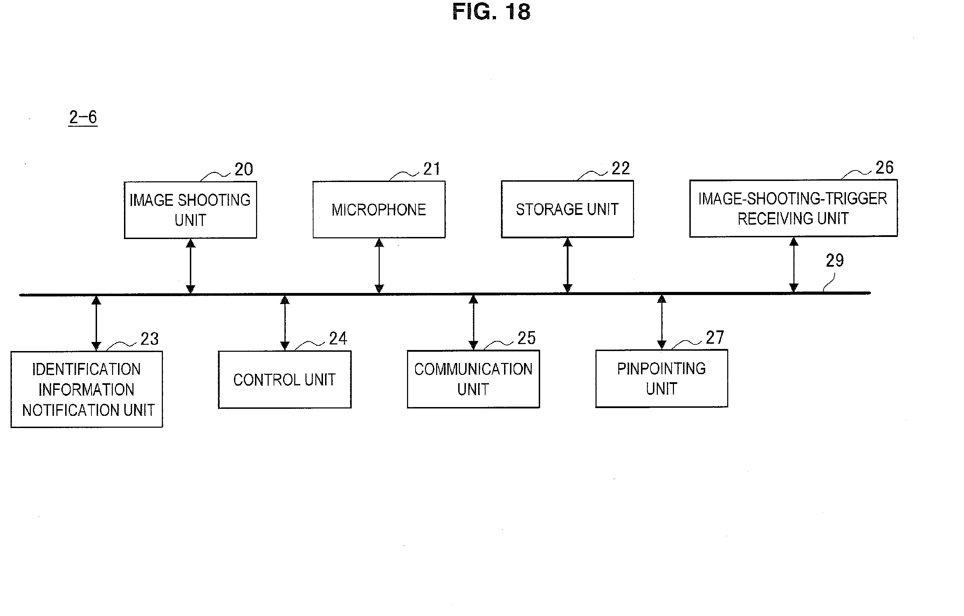

FIG. 17 is an explanatory diagram showing an overview of a content management system according to a third embodiment. As shown in FIG. 17, the user 3 holds an image-shooting-trigger notification device 8 for notifying a trigger signal, and an automatic image shooting device 2-6A receives the trigger signal and shoots an image. On the other hand, an automatic image shooting device 2-6B does not receive the image shooting trigger and does not shoot an image. Note that, the automatic image shooting devices 2-6A and 2-6B are referred to as automatic image shooting devices 2-6 in a case where it is not necessary to particularly distinguish the automatic image shooting devices 2-6A and 2-6B. Hereinafter, with reference to FIG. 18, a configuration of the automatic image shooting device 2-6 is explained. Next, an operation process is explained.

### [2-3-1. Configuration]

FIG. 18 is a block diagram showing a configuration of the automatic image shooting device 2-6 according to the third embodiment. As shown in FIG. 18, the automatic image shooting device 2-6 includes an image-shooting-trigger receiving unit 26 and a pinpointing unit 27 in addition to similar structural elements of the automatic image shooting device 2-1 explained with reference to FIG. 3.

### -Image-shooting-trigger Receiving Unit

The image-shooting-trigger receiving unit 26 receives a trigger signal notified by the image-shooting-trigger notification device 8. In a case where the image-shooting-trigger receiving unit 26 receives the trigger signal, the image shooting unit 20 shoots an image. Note that, the trigger signal may include specifying information for specifying the user 3 holding the image-shooting-trigger notification device 8.

### -Pinpointing Unit

The pinpointing unit 27 pinpoints a location of the image-shooting-trigger notification device 8 that has notified the trigger signal. For example, in a case where the trigger signal has a directivity, the pinpointing unit 27 pinpoints a location of the image-shooting-trigger notification device 8 on the basis of an angle, intensity, or the like of the trigger signal received by the image-shooting-trigger receiving unit 26. Alternatively, in a case where the trigger signal includes information indicating an image of a face of the user 3, the pinpointing unit 27 may recognize the face in an image of the content shot by the image shooting unit 20 and pinpoint a location of the user 3, or in other words, a location of the image-shooting-trigger notification device 8. For example, in a case where the server 4 stores the image of the face of the user 3 in association with specifying information for specifying the user 3, the information indicating the image of the face of the user 3 is the specifying information.

### [2-3-2. Operation Process]

In a case of receiving the trigger signal, the automatic image shooting device 2-6 shoots an image of the user 3. So as to shoot the image of the user 3, the image-shooting-trigger notification device 8 notifies the automatic image shooting device 2-6 of information indicating that the user 3 is included in an image shooting range of the automatic image shooting device 2-6.

As an example, the trigger signals may have directivities, and the automatic image shooting device 2-6 may receive only some of the trigger signals transmitted from an image shooting range of the image shooting unit 20. That is, the user 3 notifies the trigger signal in a direction in which the image-shooting-trigger notification device 8 is pointed, and only an automatic image shooting device 2-6 that is located in the direction and whose image shooting range includes a source of the trigger signal may receive the trigger and shoot an image. Preferably, the image-shooting-trigger notification device 8 has a shape allowing a direction in which the image shooting trigger is notified to be visible, such as a shape similar to a laser pointer.

As another example, a pinpointing unit 27 of an automatic image shooting device 2-6 may pinpoint a location of the image-shooting-trigger notification device 8 that has transmitted a trigger signal. Subsequently, the automatic image shooting device 2-6 may change a direction, an angle of view, or the like of the image shooting unit 20 in a manner that an image shooting range includes the location pinpointed by the pinpointing unit 27, or in other words, in a manner that the user 3 is included in content of an image to be shot by the image shooting unit 20.

### (Supplement)

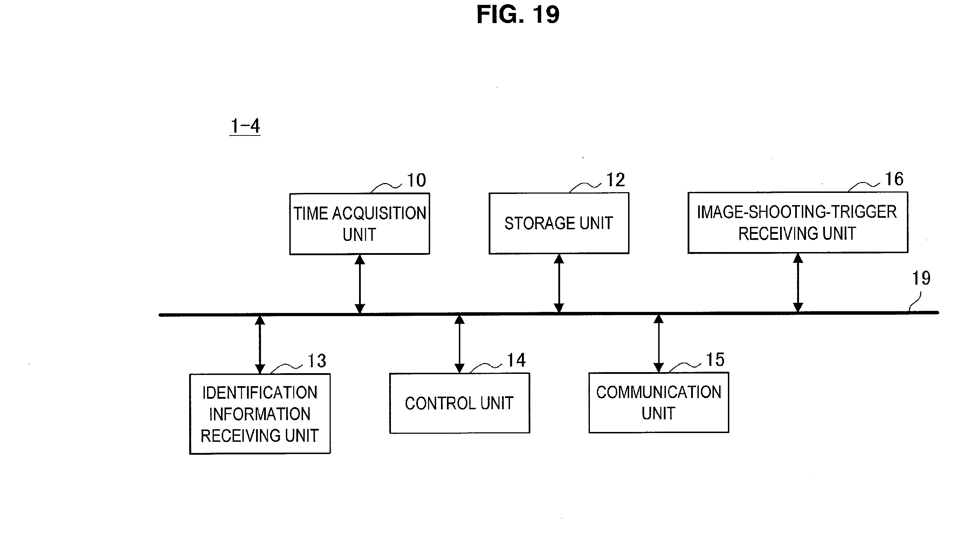

Note that, the image-shooting-trigger notification device 8 may be integrated with the identification information receiving device 1-4. That is, as shown in FIG. 19, the identification information receiving device 1-4 may include an image-shooting-trigger notification unit 16 having a function of notifying a trigger signal in a way similar to the image-shooting-trigger notification device 8, in addition to the structural elements similar to the identification information receiving device 1-1 explained with reference to FIG. 4.

### [2-3-3. Effect]

As explained above, the automatic image shooting device 2-6 according to the present embodiment can acquire content in a case of receiving a trigger signal. Accordingly, the automatic image shooting device 2-6 can acquire content at a timing when the user 3 wanted to be shot as an image. Since the automatic image shooting device 2-6 whose image shooting range includes a source of a trigger signal shoots an image in a case where the trigger signal has a directivity, an image of the user 3 is shot by the automatic image shooting device 2-6 that faces the user 3. That is, for example, the user 3 can acquire content of an image of the user 3 shot with a desired background by standing against a landscape that the user 3 wants to include as a background and transmitting a trigger signal in a front direction.

In addition, since the user 3 transmits a trigger signal at a spot where the user 3 wants to be shot as an image, an installer of the automatic image shooting device 2-6 can easily recognize that a location of an automatic image shooting device 2-6 that has received many trigger signals is a spot where the user 3 likes. Accordingly, the installer of the automatic image shooting devices 2-6 can install many automatic image shooting devices 2-6 or an automatic image shooting device 2-6 having high image-shooting ability in a popular spot.

### <2-4. Fourth Embodiment>

### [2-4-1. Overview]

In the content management system according to the present embodiment, the server 4 can provide the user 3 with pieces of content each to which a priority has been attached on the basis of a plurality of rules.

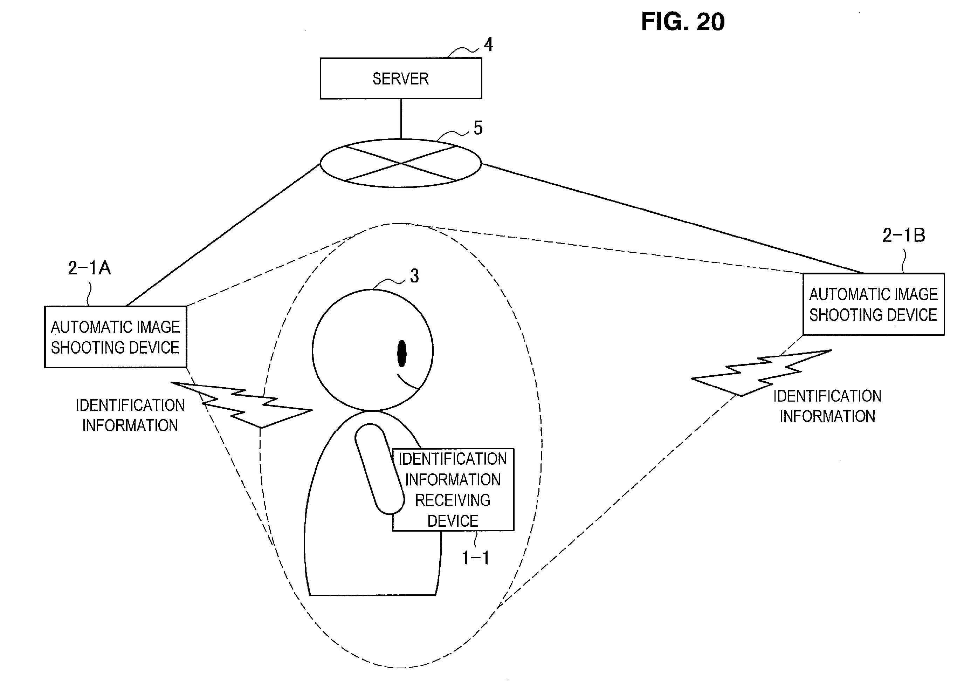

FIG. 20 is an explanatory diagram showing an overview of a content management system according to the fourth embodiment. As shown in FIG. 20, automatic image shooting devices 2-1A and 2-1B shoot images of the user 3, and an identification information receiving device 1-1 receives image shooting subject signals including identification information from the automatic image shooting devices 2-1A and 2-1B. Here, the automatic image shooting device 2-1A is located on a back side of the user 3 at a short distance from the user 3, and the automatic image shooting device 2-1B is located on a front side of the user 3 at a long distance from the user 3. Accordingly, although video shot by the automatic image shooting device 2-1A is video of the back side of the user 3, a collected sound is clear due to the short distance. On the other hand, although video shot by the automatic image shooting device 2-1B is video of the front side of the user 3, a collected sound is not clear due to the long distance.

Accordingly, the priority deciding unit 442 gives plurality of priorities based on the plurality of rules to content. Specifically, for example, the priority deciding unit 442 gives a high priority to video content capturing the front side of the user 3, and gives a high priority to sound content in which voice of the user 3 is clear. That is, the priority deciding unit 442 gives a high priority to video shot by the automatic image shooting device 2-1B and gives a low priority to sound recorded by the automatic image shooting device 2-1B. In addition, the priority deciding unit 442 gives a low priority to video shot by the automatic image shooting device 2-1A and gives a high priority to sound recorded by the automatic image shooting device 2-1A. Note that, clearness of the voice of the user 3 may be determined in accordance with distance between the automatic image shooting device 2-1 and the user 3, loudness of noise component such as wind roar included in sound of content, or loudness of voice component of the user 3 obtained by a speaker recognition technology.

Next, the server 4 can provide the user 3 with content on the basis of the priorities. That is, the video shot by the automatic image shooting device 2-1B and the sound collected by the automatic image shooting device 2-1A are transmitted to the information processing device 7 or the identification information receiving device 1-1. At this time, for example, the server 4 may generate new content by combining the video shot by the automatic image shooting device 2-1B and the sound collected by the automatic image shooting device 2-1A, and provide the user 3 with the new content.

Note that, as an example of the content acquisition device of the content management system, there has been explained that the content acquisition device includes the automatic image shooting device 2-1 including the image shooting unit 20 and the microphone 21. However, the present disclosure is not limited thereto. For example, the content management system may include a camera including an image shooting unit 20, and a sound recorder including a microphone 21. In addition, the content management system according to the present embodiment may give priorities to video or image content shot by the camera and sound recorded by the sound recorder, on the basis of different rules. For example, video shot by a camera installed at a fixed point and sound collected by a pin microphone or the like attached to a smartphone held by the user 3 may be combined in the server 4, and provided to the user 3.

### [2-4-2. Effect]

As explained above, the content management system according to the present embodiment can provide the user 3 with pieces of content each to which a priority has been attached on the basis of the plurality of rules. Accordingly, the content management system can extract only a good part from pieces of content acquired by a plurality of automatic image shooting devices 2, and provide the user 3 with the good part. For example, as explained above, the user 3 can be provided with the video in which the front side of the user 3 is captured and the sound of the user 3 collected at the short distance. Alternatively, for example, the user 3 can be provided with video of the user 3 shot from various angles, whole video shot at a long distance, or partial video shot at a short distance.

### «3. Conclusion»

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

For example, in the above embodiment, there has been explained that time (time information) when content has been acquired is time when the identification information receiving device 1 has received an image shooting subject signal, and time when the server 4 has received the content. However, the present technology is not limited thereto. For example, the automatic image shooting device 2 may include the time (time information) when content has been acquired in an image shooting subject signal, notifies the image shooting subject signal, and transmits the content to the server 4 in association with the time information. In this case, there is no difference between the time information included in an image shooting subject bookmark and the time information associated with content stored in the server 4.

Additionally, the present technology may also be configured as below.
(1) A content acquisition device including:
   a content acquisition unit configured to acquire content; and
   a transmission unit configured to transmit, to an outside, the content acquired by the content acquisition unit and identification information unique to the content acquisition device,
   wherein the content and the identification information that have been transmitted by the transmission unit are associated with time information indicating time when the content acquisition unit acquires the content, are stored in a storage unit included in a server, and are, in a case where the server receives the identification information and the time information from an information processing device, referred to when content associated with the received identification information and the received time information is searched for from among the content stored in the storage unit and is transmitted to the information processing device.
(2) The content acquisition device according to (1),
   wherein the transmission unit transmits the content and the identification information to the server.
(3) The content acquisition device according to (1),
   wherein the transmission unit transmits the content, the identification information, and the time information to the server via another communication device.
(4) The content acquisition device according to any one of (1) to (3), further including:
   a notification unit configured to notify a portable device of the identification information, the portable device being located in the periphery.
(5) The content acquisition device according to (4),
   wherein the notification unit notifies the portable device of range information indicating a target range where the content acquisition unit acquires the content.
(6) The content acquisition device according to (4) or (5), further inluding:
   a reception unit configured to receive a content acquisition request signal notified from the portable device,
   wherein, in a case where the reception unit receives the content acquisition request signal, the content acquisition unit acquires the content.
(7) The content acquisition device according to (6), further including:
   a pinpointing unit configured to pinpoint a location of the portable device that has notified the content acquisition request signal,
   wherein the content acquisition unit changes the target range where the content is acquired, in accordance with the location of the portable device pinpointed by the pinpointing unit.
(8) A portable device including:
   a reception unit configured to receive identification information unique to a content acquisition device from the content acquisition device;
   a storage control unit configured to associate the identification information received by the reception unit with time information indicating time when the content acquisition device acquires content, and store the identification information and time information in a storage medium; and
   a communication unit configured to communicate with an outside.
(9) The portable device according to (8),
   wherein the communication unit transmits the identification information and the time information that are stored in the storage medium to a server via another information processing device,
   wherein the identification information and the time information are referred to when the server searches for content associated with the identification information and the time information that have been received via the another information processing device from among the content stored in a storage unit include in the server and transmits the content that has been searched for to the information processing device.
(10) The portable device according to (8),
   wherein the communication unit transmits the identification information and the time information that are stored in the storage medium to a server, and receives, among the content stored in a storage unit included in the server, content associated with the transmitted identification information and the transmitted time information from the server.
(11) The portable device according to any one of (8) to (10), further including:
   a notification unit configured to notify the content acquisition device of a content acquisition request signal to request the content acquisition device to acquire the content.
(12) The portable device according to any one of (8) to (11),
   wherein the content acquisition device notifies the portable device of the identification information by using a radio wave, the portable device being located in the periphery,
   wherein the storage control unit associates the identification information, the time information, with radio field intensity when the reception unit receives the identification information, and stores the identification information, the time information, and the radio field intensity in the storage medium, and
   wherein the communication unit transmits the identification information, the time information, and the radio field intensity that are stored in the storage medium to an outside.
(13) A server including:
   a communication unit configured to receive, from a content acquisition device, content acquired by the content acquisition device and identification information unique to the content acquisition device;
   a storage unit configured to associate the content, the identification information, with time information indicating time when the content acquisition device acquires the content, and store the content, the identification information, and the time information;
   a search unit configured to, in a case where the communication unit receives the identification information and the time information from an information processing device, search for content associated with the received identification information and the received time information from among the content stored in the storage unit; and
   a communication control unit configured to control the communication unit to transmit the content searched for by the search unit to the information processing device.
(14) The server according to (13), further including:
   a priority deciding unit configured to decide a priority of the content searched for by the search unit on the basis of a predetermined rule,
   wherein the communication control unit controls the communication unit to transmit the content to the information processing device on the basis of the priority decided by the priority deciding unit.
(15) The server according to (14),
   wherein, as the predetermined rule, the priority deciding unit decides the priority on the basis of the identification information associated with the content.
(16) The server according to (14) or (15),
   wherein the content is an image,
   wherein the communication unit receives specifying information for specifying a person from the information processing device, and
   wherein, as the predetermined rule, the priority deciding unit decides the priority on the basis of a distinguishability of a face region of the person who is specified by the specifying information included in the content.
(17) The server according to any one of (14) to (16),
   wherein location information indicating a location of a portable device at time indicated by the time information, and range information indicating an acquisition target range when the content acquisition unit acquires the content are received from an information processing device, and
   wherein, as the predetermined rule, the priority deciding unit decides the priority on the basis of the location information and the range information.
(18) The server according to any one of (14) to (17),
   wherein the content acquisition device notifies a portable device of the identification information by using a radio wave, the portable device being located in the periphery,
   wherein the communication unit receives radio field intensity when the portable device receives the identification information from the information processing device, and
   wherein, as the predetermined rule, the priority deciding unit decides the priority on the basis of the radio field intensity.
(19) The server according to any one of (14) to (18),
   wherein priority deciding unit decides a plurality of priorities of the content on the basis of a plurality of the predetermined rules.
(20) The server according to any one of (13) to (19), further including:
   a content modification unit configured to modify content stored in the storage unit,
   wherein the content is an image,
   wherein the communication unit receives specifying information for specifying a person from the information processing device, and
   wherein the content modification unit modifies a face region of the person that is included in the content associated with the identification information and the time information and that is specified by the specifying information received by the communication unit, in a manner that a distinguishability is deteriorated.
(21) An information processing device including:
   a communication unit configured to transmit identification information unique to a content acquisition device and time information indicating time when the content acquisition device acquires content to a server, and receive content associated with the identification information and the time information from the server; and
   an output control unit configured to perform control in a manner that the communication unit outputs the content received from the server and associated with the identification information and the time information.
(22) The information processing device according to (21), further including:
   a search unit configured to search for content associated with the identification information and the time information from among the content stored in a storage unit included in the server; and
   a priority deciding unit configured to decide a priority of the content searched for by the search unit on the basis of a predetermined rule,
   wherein the communication unit receives the content on the basis of the priority decided by the priority deciding unit.
(23) A non-transitory computer-readable storage medium having a program stored therein, the program causing a computer to execute:
   transmitting identification information unique to a content acquisition device and time information indicating time when the content acquisition device acquires content to a server, and receiving content associated with the identification information and the time information from the server; and
   performing control in a manner that the content received from the server and associated with the identification information and the time information is output.

### Reference Signs List

- 10 1, 1-1, 1-2, 1-3, and 1-4: identification information receiving device time acquisition unit
- 12: storage unit
- 13: identification information receiving unit
- 14: control unit
- 15: communication unit
- 16: image-shooting-trigger notification unit
- 19: bus
- 2, 2-1, 2-2, 2-3, 2-4, 2-5, and 2-6: automatic image shooting device
- 20: image shooting unit
- 21: microphone
- 22: storage unit
- 23: identification information notification unit
- 24: control unit
- 25: communication unit
- 26: image-shooting-trigger receiving unit
- 27: pinpointing unit
- 29: bus
- 3: user
- 4: server
- 40: time acquisition unit

## Claims

1. A content acquisition device comprising:
a content acquisition unit configured to acquire content; and
a transmission unit configured to transmit, to an outside, the content acquired by the content acquisition unit and identification information unique to the content acquisition device,
wherein the content and the identification information that have been transmitted by the transmission unit are associated with time information indicating time when the content acquisition unit acquires the content, are stored in a storage unit included in a server, and are, in a case where the server receives the identification information and the time information from an information processing device, referred to when content associated with the received identification information and the received time information is searched for from among the content stored in the storage unit and is transmitted to the information processing device.

2. The content acquisition device according to claim 1,
wherein the transmission unit transmits the content and the identification information to the server.

3. The content acquisition device according to claim 1,
wherein the transmission unit transmits the content, the identification information, and the time information to the server via another communication device.

4. The content acquisition device according to claim 1, further comprising:
a notification unit configured to notify a portable device of the identification information, the portable device being located in the periphery.

5. The content acquisition device according to claim 4,
wherein the notification unit notifies the portable device of range information indicating a target range where the content acquisition unit acquires the content.

6. The content acquisition device according to claim 4, further comprising:
a reception unit configured to receive a content acquisition request signal notified from the portable device,
wherein, in a case where the reception unit receives the content acquisition request signal, the content acquisition unit acquires the content.

7. The content acquisition device according to claim 6, further comprising:
a pinpointing unit configured to pinpoint a location of the portable device that has notified the content acquisition request signal,
wherein the content acquisition unit changes the target range where the content is acquired, in accordance with the location of the portable device pinpointed by the pinpointing unit.

8. A portable device comprising:
a reception unit configured to receive identification information unique to a content acquisition device from the content acquisition device;
a storage control unit configured to associate the identification information received by the reception unit with time information indicating time when the content acquisition device acquires content, and store the identification information and time information in a storage medium; and
a communication unit configured to communicate with an outside.

9. The portable device according to claim 8,
wherein the communication unit transmits the identification information and the time information that are stored in the storage medium to a server via another information processing device,
wherein the identification information and the time information are referred to when the server searches for content associated with the identification information and the time information that have been received via the another information processing device from among the content stored in a storage unit include in the server and transmits the content that has been searched for to the information processing device.

10. The portable device according to claim 8,
wherein the communication unit transmits the identification information and the time information that are stored in the storage medium to a server, and receives, among the content stored in a storage unit included in the server, content associated with the transmitted identification information and the transmitted time information from the server.

11. The portable device according to claim 8, further comprising:
a notification unit configured to notify the content acquisition device of a content acquisition request signal to request the content acquisition device to acquire the content.

12. The portable device according to claim 8,
wherein the content acquisition device notifies the portable device of the identification information by using a radio wave, the portable device being located in the periphery,
wherein the storage control unit associates the identification information, the time information, with radio field intensity when the reception unit receives the identification information, and stores the identification information, the time information, and the radio field intensity in the storage medium, and
wherein the communication unit transmits the identification information, the time information, and the radio field intensity that are stored in the storage medium to an outside.

13. A server comprising:
a communication unit configured to receive, from a content acquisition device, content acquired by the content acquisition device and identification information unique to the content acquisition device;
a storage unit configured to associate the content, the identification information, with time information indicating time when the content acquisition device acquires the content, and store the content, the identification information, and the time information;
a search unit configured to, in a case where the communication unit receives the identification information and the time information from an information processing device, search for content associated with the received identification information and the received time information from among the content stored in the storage unit; and
a communication control unit configured to control the communication unit to transmit the content searched for by the search unit to the information processing device.

14. The server according to claim 13, further comprising:
a priority deciding unit configured to decide a priority of the content searched for by the search unit on the basis of a predetermined rule,
wherein the communication control unit controls the communication unit to transmit the content to the information processing device on the basis of the priority decided by the priority deciding unit.

15. The server according to claim 14,
wherein, as the predetermined rule, the priority deciding unit decides the priority on the basis of the identification information associated with the content.

16. The server according to claim 14,
wherein the content is an image,
wherein the communication unit receives specifying information for specifying a person from the information processing device, and
wherein, as the predetermined rule, the priority deciding unit decides the priority on the basis of a distinguishability of a face region of the person who is specified by the specifying information included in the content.

17. The server according to claim 14,
wherein location information indicating a location of a portable device at time indicated by the time information, and range information indicating an acquisition target range when the content acquisition unit acquires the content are received from an information processing device, and
wherein, as the predetermined rule, the priority deciding unit decides the priority on the basis of the location information and the range information.

18. The server according to claim 14,
wherein the content acquisition device notifies a portable device of the identification information by using a radio wave, the portable device being located in the periphery,
wherein the communication unit receives radio field intensity when the portable device receives the identification information from the information processing device, and
wherein, as the predetermined rule, the priority deciding unit decides the priority on the basis of the radio field intensity.

19. The server according to claim 14,
wherein priority deciding unit decides a plurality of priorities of the content on the basis of a plurality of the predetermined rules.

20. The server according to claim 13, further comprising:
a content modification unit configured to modify content stored in the storage unit,
wherein the content is an image,
wherein the communication unit receives specifying information for specifying a person from the information processing device, and
wherein the content modification unit modifies a face region of the person that is included in the content associated with the identification information and the time information and that is specified by the specifying information received by the communication unit, in a manner that a distinguishability is deteriorated.

21. An information processing device comprising:
a communication unit configured to transmit identification information unique to a content acquisition device and time information indicating time when the content acquisition device acquires content to a server, and receive content associated with the identification information and the time information from the server; and
an output control unit configured to perform control in a manner that the communication unit outputs the content received from the server and associated with the identification information and the time information.

22. The information processing device according to claim 21, further comprising:
a search unit configured to search for content associated with the identification information and the time information from among the content stored in a storage unit included in the server; and
a priority deciding unit configured to decide a priority of the content searched for by the search unit on the basis of a predetermined rule,
wherein the communication unit receives the content on the basis of the priority decided by the priority deciding unit.

23. A non-transitory computer-readable storage medium having a program stored therein, the program causing a computer to execute:
transmitting identification information unique to a content acquisition device and time information indicating time when the content acquisition device acquires content to a server, and receiving content associated with the identification information and the time information from the server; and
performing control in a manner that the content received from the server and associated with the identification information and the time information is output.
